Europäisches Patentamt

European Patent Office

Office européen des brevets

(11) Publication number: **0 249 649**
**A1**

## EUROPEAN PATENT APPLICATION

(21) Application number: 86108351.7

(22) Date of filing: 19.06.86

(51) Int. Cl.4: **F16H 3/08** , **F16H 57/12**

(43) Date of publication of application:
**23.12.87 Bulletin 87/52**

(84) Designated Contracting States:
**DE FR GB**

(71) Applicant: **Lovrenich, Rodger T.**
**209 Whispering Sands**
**Santa Teresa New Mexico 88008(US)**

(72) Inventor: **Lovrenich, Rodger T.**
**209 Whispering Sands**
**Santa Teresa New Mexico 88008(US)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Mozartstrasse 23**
**D-8000 München 2(DE)**

(54) Zero backlash shiftable transmission.

(57) A zero backlash shiftable transmission includes
an input shaft (10) and an output shaft (18) coupled
through a gear network (12, 32, 58, 60 62) that is
preloaded with a spring arrangement (52, 54, 56) to
eliminate the backlash from the engaged surfaces of
the gear teeth. There are three positions and no
neural. In the first position, tapered clutch arrange-
ment (24, 26, 27 and 36 through 44) engages the
input shaft (10) directly with the output shaft (18). In
the second or shift position, the clutch engages both
the input shaft (10) and the output shaft (18) while
the transmission is slowed or stopped for shifting. In
the third position, the clutch engages the input shaft
(10) with the output shaft (18) through the preloaded
gear network (12, 32, 58, 60, 62). The tapered clutch
arrangement provides locked clutch coupling in the
first and third positions, and provides tolerance for
shifting without completely releasing either the input
shaft or the output shaft in the shift position.

Fig. I

## ZERO BACKLASH SHIFTABLE TRANSMISSION

The present invention relates to a shiftable transmission that eliminates backlash in the operative positions of the transmission.

### Background and Objects of the Invention

Conventional shiftable transmissions use gears and splines incorporating backlash so that the transmission can be shifted. This backlash causes error and downgrades the ability to determine or hold position of the output shaft of the transmission as a function of input position. Various attempts have been made to solve the problems arising as the result of backlash in simple gear sets. However, such attempts haven't adapted well to shiftable transmissions and result in complex devices that have not been successful.

In industries such as the automated machine tool industry, it is important to be able to determine and hold position of a transmission output shaft via its input shaft, and to make every effort to reduce the effects of backlash. The cost of down time to repair or exchange splined components and gears is substantial in a large-scale installation, such as an automated production line in the automative industry.

It is a general object of the present invention to provide a shiftable transmission which overcomes the aforementioned deficiencies in the art. A more specific object of the invention is to provide a shiftable transmission of the described character which eliminates backlash among the transmission gears, and thus assures a direct relation between transmission input and output motions.

### Summary of the Invention

The shortcomings of prior art shiftable transmissions are overcome in an exemplary embodiment of the present invention that includes an input shaft and an output shaft coupled through a gear network that is preloaded with a spring arrangement to eliminate the backlash from the engaged surfaces of the gear teeth. The transmission includes a clutch that has three drive positions and no neutral position. In the first position, the clutch engages the input shaft directly with the output shaft. In the second or shift position, the clutch engages both the input shaft and the output shaft while the transmission is slowed or stopped for shifting. In the third position, the clutch engages the input shaft with the output shaft through the preloaded gear network. Tapered clutch surfaces in the clutch provide locked clutch coupling in the first and third positions, and provide facility for shifting without completely releasing either the input shaft or the output shaft in the shift position.

### Brief Description of the Drawings

Figure 1 is a perspective view, partially sectioned, of the zero backlash shiftable transmission in accordance with the present invention.

Figure 2 is a perspective view, partially sectioned, of the input gear of FIG. 1 and its associated pocket wheel.

Figure 3 is a perspective view, partially sectioned, of the shift collar of FIG. 1 and its associated pins.

Figure 4 is a perspective view, partially sectioned, of the input gear pocket wheel and shift collar of FIG. 1 in the first or transmission position.

Figure 5 is a view, similar to that of Figure 4, of the output gear of FIG. 1 and associated pocket wheel in the first position of the transmission.

Figures 6-8 are schematic views respectively showing the transmission in the first or high speed position, the second or shifting position, and the third or low speed position.

### Detailed Description

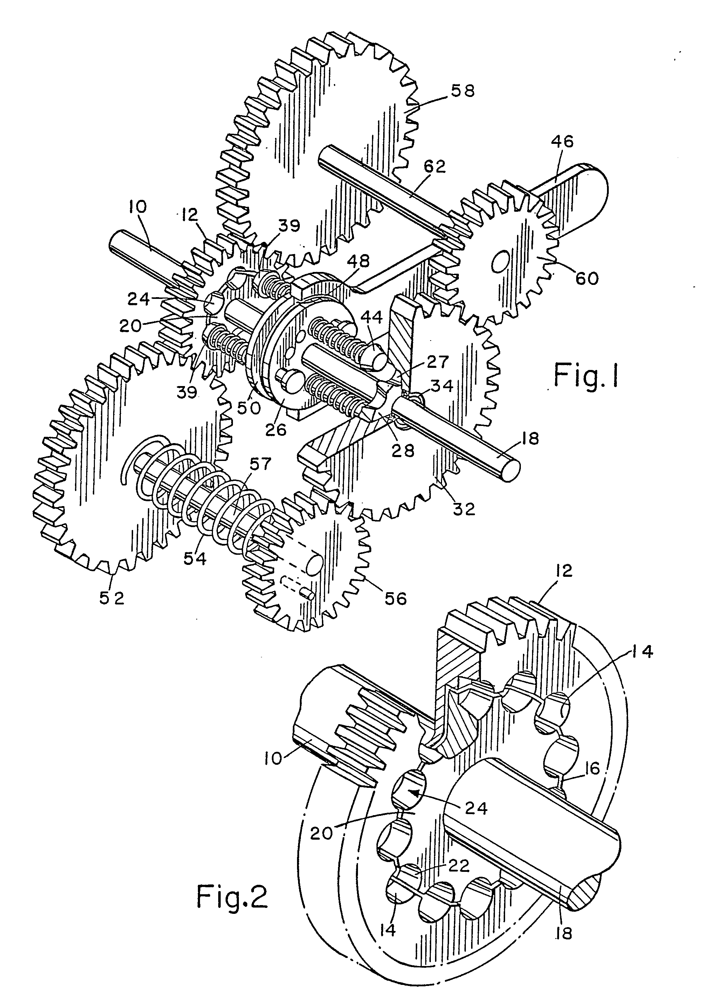

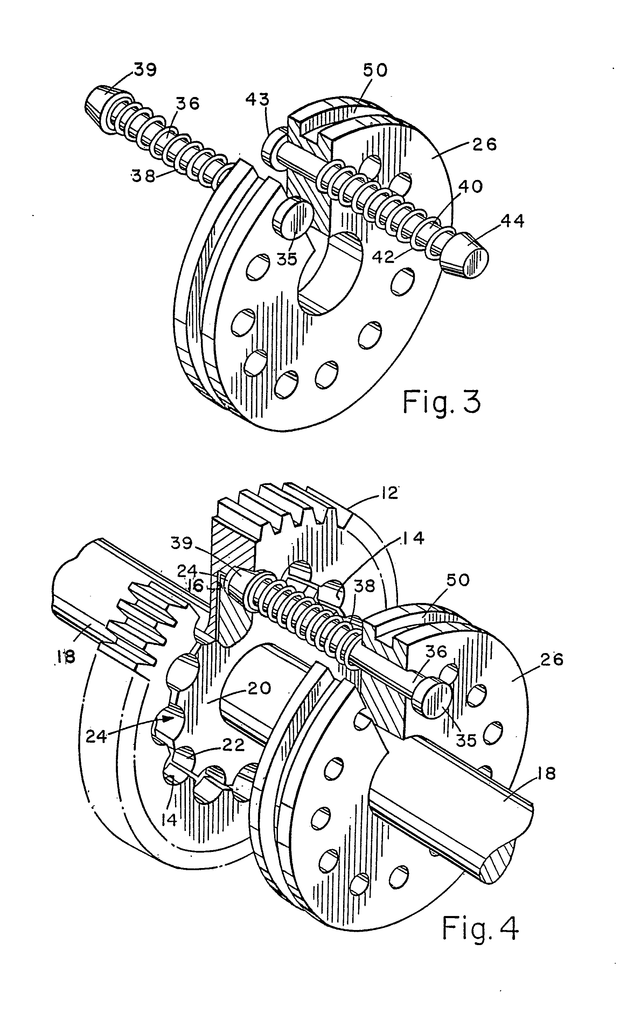

Referring to the drawings, a zero backlash shiftable transmission of the present invention includes an input shaft 10 support for rotation (by means not shown such as an electric motor for example). Input shaft 10 has an input gear 12 coaxially affixed to one end thereof. Input gear 12 includes an angularly spaced circumferential array of tapered pocket portions 14 that face into the open center recess 16 of input gear 12 (Figures 2, 4 and 6). An output shaft 18 is supported for rotation coaxially with input shaft 10 and includes a pocket wheel 20 affixed to an end adjacent to gear 12 and disposed within recess 16. A circumferential array of tapered pocket portions 22 are disposed around the periphery of wheel 20 at angular spacing equal to spacing of pocket portions 14 in gear 12. Thus, pocket portions 14, 22 in gear 12 and wheel 20 cooperate when in radial alignment (as shown in the drawings) to form conical pockets 24 which taper narrowingly in the direction of shaft 10 and on axes parallel thereto.

A second pocket wheel 28, which is the mirror image of wheel 20, is affixed to shaft 18 and spaced therealong from wheel 20. An output gear 32 is rotatably carried in shaft 18 by a bearing 34 on the side of wheel 28 remote from wheel 20. Wheel 28 is positioned in a central recess 29 of gear 32. Gear 32 and wheel 28 have complementary arrays of tapered pocket portions 31, 30 which cooperate when radially aligned (FIGS. 1, 5 and 7-8) to form conical pockets 27 which taper narrowingly away from wheel 20 on axes parallel to shaft 18.

A shift yoke or collar 26 is slidably carried on shaft 18 between wheels 20, 28. A first circumferential array of locking pins 36 are carried about the periphery of collar 26 for axial sliding motion parallel to shaft 18. A second circumferential array of locking pins 40 are axially slidably carried by collar 26, pins 36, 40 being staggered about the periphery of collar 26. Pins 36, 40 are positioned at the radius of pockets 24, 27 from the axis of shaft 18. Each pin 36 has a conical head 39 which tapers narrowingly away from collar 26 and contoured for seating engagement in pockets 24. A coil spring 38 encircles each pin 36 and is captured between head 39 and collar 26 for urging pin 36 and head 39 axially away from collar 26. A flanged head 35 on each pin 36 is positioned on the opposing side of collar 26, capturing pin 36 thereon. Pins 40 are mirror images of pins 36, having flanged heads 43, springs 42 and conical heads 44 for seating in pockets 27.

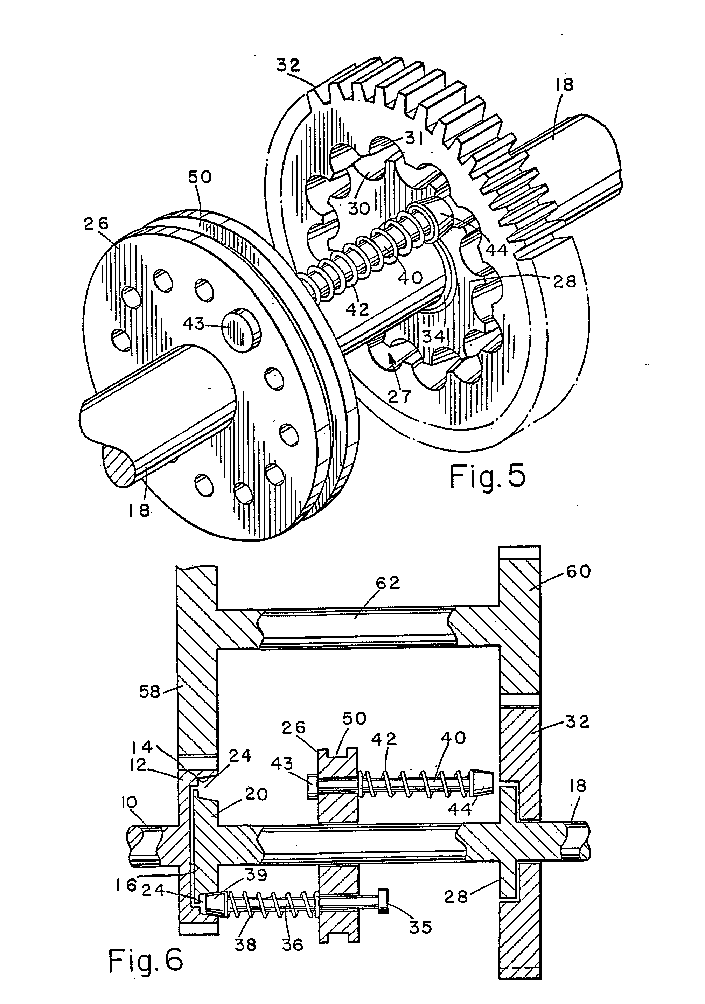

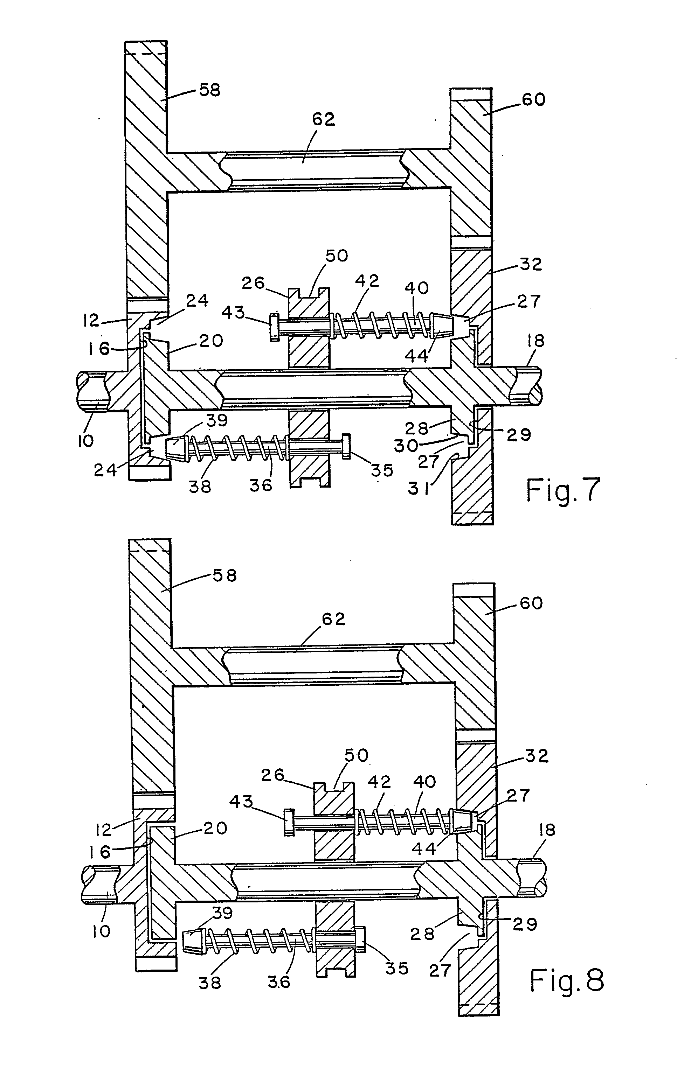

A shift lever 46 (Figure 1) has two diametrically opposed pins 48 at the top and bottom seated in a radially outwardly facing peripheral groove 50 in shift collar 26 for moving the shift collar 26 axially along shaft 18. Shift lever 46 moves tapered lock heads 39 into pockets 24 formed by input gear 12 and pocket wheel 20 in a first or high speed position of the transmission (FIGS. 1, 4-6). The lengths of pins 36, 40 are coordinated with axial spacing between wheels 20, 28 and gears 12, 32 such that heads 44 are coaxially spaced from but adjacent to pockets 27 in this position of collar 26. When drive shaft 10 and gear 12 slow down or stop, shift collar 26 can be moved to the right (in the drawings) to and through the shift position (FIG. 7) toward the third or low speed position (FIG. 8). Tapered lock heads 39 are gradually withdrawn from pockets 24 and tapered lock heads 44 move into pockets 27 formed by output gear 32 and pocket wheel 28. When shifting yoke 26 between the operating positions (FIGS. 6 and 8), one set of lock heads gradually moves out of the associated pockets while the other set of lock heads moves gradually into the other pockets that are being rotationally aligned. It is important to note that the lengths of pins 36, 40 and the spacing of wheels 20, 28 are such that one set of lock heads do not disengage before the other is engaged. That is, in the shift position of FIG. 7, heads 39 remain in pockets 24 until heads 44 can seat in pockets 27. In this way, coupling between the input shaft and the output shaft is not lost during the shifting procedure.

Referring to Figure 1, input gear 12 is meshed with a gear 52 carried on a shaft 57 spaced from and parallel to shaft 18. Gear 52 is engaged with one end of a coil spring 54, the other end of which is connected to a gear 56 also carried by shaft 57. During assembly, gears 52, 56 are rotated in the opposite direction with coil spring 54 attached to store energy in the spring, and then gears 52, 56 are respectively meshed with gears 12, 32. At least one of the gears 52, 56 is freely rotatably on shaft 57. A gear 58, which is the same size and has the same number of teeth as does gear 52, is fixedly connected to a gear 60 by a shaft 62 spaced from and parallel to shaft 18. Gear 60 is the same size and has the same number of teeth as does gear 56. Gear 58 meshes with gear 12 and gear 60 meshes with gear 32. (The gears do not have to be the same size and have the same number of teeth). The energy stored in coil spring 54 forces zero-backlash toothed engagement throughout the gear train consisting of gears 12, 58, 60, 32, 56 and 52, and removes the backlash out of the gear train in operation.

Drive from input shaft 10 is transferred either directly to output shaft 18 through pockets 24 and wheel 20 in the high speed position (Figures 1, 4, 5 and 6), or through the entire gear assembly pockets 27 and wheel 28 in the low speed position (Figure 8). Precision is obtained in rotating the output shaft and holding it, or determining the position of the output shaft relative to the input shaft. This is accomplished with a simple and inexpensive arrangement. Although straight-sided or conical tapers are shown on the lock heads and pockets, it is to be understood that curved tapers are also acceptable. The tapering of the lock heads and pockets permits ready seating of the heads in the pockets even after wear of the gear teeth causes some misalignment of the lock heads and pockets.

## Claims

1. A shiftable transmission comprising an input shaft (10) coupled to an input gear (12), an output shaft (18) having first and second rotation-transmitting means (20, 28) affixed thereto and spaced from each other axially of said output shaft (18), gear transmission means (58, 60, 62 and 32) coupled to one of said shafts (10) and clutch means (26 and 36 through 44) positioned between said rotation-transmitting means (20, 28) and movable axially of said first output shaft (18) for selectively engaging said input shaft (10) to said output shaft (18) through said input gear (12) and said rotation-transmitting means (20) in one position of said clutch means and for engaging said input shaft (10) to said output shaft (18) through said gear transmission means (58, 60, 62 and 32) and said second rotation-transmitting means (28) in another position of said clutch means.

2. The transmission set forth in claim 1 wherein said gear transmission means (58, 60, 62 and 32) includes an output gear (32) rotatably carried by said output shaft (18), said first and second rotation-transmitting means (20, 28) being respectively positioned adjacent to said input gear (12) and said output gear (32), and wherein said clutch means (26 and 36 through 44) comprise means for selectively coupling said output shaft (18) and said rotation-transmitting means (20, 28) affixed thereto either to said input gear (12) or to said output gear (32)

3. The transmission set forth in claim 2 wherein said input gear (12) and said output gear (32) including opposed recesses (16, 29), said rotation-transmitting means (20, 28) being rotatably positioned in said recesses (16, 29).

4. The transmission set forth in claim 3 wherein said recesses (16, 29) and said rotation-transmitting means (20, 28) include opposed pocket portions (14, 31, 22 and 30) which cooperate when in radial alignment to form angularly spaced arrays of pockets (24, 27) between said input gear (12) and said first rotation-transmitting means (20) and between said output gear (32) and said second rotation-transmitting means (28), and wherein said clutch means (26 and 36 through 44) includes means (39, 44) for selective seating in one or the other array of said pockets (24, 27).

5. The transmission set forth in claim 4 wherein said clutch means (26 and 36 through 44) includes a yoke (26) slidably carried by said output shaft (18) between said rotation-transmitting means (20, 28), pins (36, 40) projecting in opposite axial directions from said yoke (26), each of said pins having a head (39, 44) for seating in pockets (24, 27) of one of said arrays.

6. The transmission set forth in claim 5 wherein said clutch means (26 and 36 through 44) further comprises a spring (38, 42) surrounding each said pin (36, 40) and urging the associated said head (39, 44) axially of said yoke (26).

7. The transmission set forth in claim 6 wherein axial lengths of said pins (36, 40) and heads (39, 44) are coordinated with axial separation of said arrays of pockets (24, 27) such that said heads (39, 44) engage said pockets (24, 27) simultaneously and said output shaft (18) remains coupled to said input shaft (10) during shifting of said transmission.

8. The transmission set forth in any preceeding claim wherein said heads (39, 44) and said pockets (24, 27) possess complementary conical geometries.

9. The transmission set forth in any preceeding claim 2 through 8 further comprising a pair of gears (52, 56) respectively coupled to said input gear (12) and said output gear (32), and means (54) biasing said pair of gears (52, 56) for opposed rotation so as to absorb backlash from said input gear (12) through said gear transmission means (58, 60, 62 and 32).

10. The transmission set forth in claim 9 wherein pair of gears (52, 56) are carried by a common shaft (57), at least one of said pair of gears (52, 56) being freely rotatable on said common shaft (57), and wherein said biasing means (54) comprises a coil spring encircling said common shaft (57).

58

46

62

10   12   39

48

60

24

20

44

27

34

39

50   26   28   32

18

Fig.1

52   54   57   56

12

14

10

24

20   22   16

14   18

Fig.2

Fig. 3

Fig. 4

Fig.5

Fig.6

Fig.7

Fig.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 227 464   (PENGILLY)<br>* Pages 9,10; figure 1 * | 1,2 | F 16 H   3/08<br>F 16 H  57/12 |
| A | | 9 | |
| | --- | | |
| A | GB-A-1 089 025   (HARDING)<br>* Pages 1,2; figures * | 1,9,10 | |
| | --- | | |
| A | FR-A-2 319 569   (ROMANOV)<br>* Pages 7-10; figures 4-8 * | 1,3-7 | |
| | --- | | |
| A | DE-A-2 819 293   (ZAHNRADFABRIK FRIEDRICHSHAFEN) | | |
| | --- | | **TECHNICAL FIELDS SEARCHED (Int. Cl.4)** |
| A | US-A-4 539 856   (FROST) | | |
| | ----- | | F 16 H   3/00<br>F 16 H  57/00<br>F 16 D  11/00 |

The present search report has been drawn up for all claims

| Place of search | Date of completion of the search | Examiner |
|---|---|---|
| THE HAGUE | 25-02-1987 | FLORES E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82